# EUROPEAN PATENT APPLICATION

(11) **EP 4 592 955 A1**
(43) Date of publication of application: **30.07.2025**
(21) Application number: 23885353.5
(22) Date of filing: 29.08.2023
(51) Int. Cl.: G06T 7/70, A01K 61/90, G06M 11/00

(54) **INFORMATION PROCESSING PROGRAM, INFORMATION PROCESSING DEVICE, AND INFORMATION PROCESSING METHOD**

(30) Priority: 01.11.2022 JP 2022175733
(71) Applicant: Softbank Corp., Tokyo 105-7529 (JP)
(72) Inventor: ISHIWAKA, Yuko, Tokyo 105-7529 (JP)
(74) Representative: SSM Sandmair
(86) International application number: PCT/JP2023/031274
(87) International publication number: WO 2024/095584

(57) **Abstract**

An information processing program causes a computer to execute an acquiring procedure of acquiring a plurality of captured images that are captured in a plurality of different directions, respectively, from a plurality of imaging devices that capture images of a corf in which a plurality of fishes are present respectively in the different directions; and an estimating procedure of, based on a distance from the imaging device corresponding to each of the captured images acquired by the acquiring procedure to each of the fishes in each of the captured images, estimating first fish positional information representing a position of each of the fishes in the corf in each of the captured images with respect to each of the captured images, aggregating a plurality of sets of the first fish positional information corresponding to positions in a given area from a given position in the corf into second fish positional information representing a position of one fish, and estimating information on the fishes based on the second fish positional information.

## Description

### Field

The present invention relates to an information processing program, an information processing device, and an information processing method.

### Background

Various techniques for improving fish farming techniques have been known. For example, a predetermined feature value that varies according to the number of fishes is extracted from captured images obtained by capturing images of fishes in a corf. A technique of sensing the number of fishes from a training model by collating the extracted feature value to the training model that is data of the relation between the feature value and the number of fishes obtained by machine learning has been known.

### Citation List

### Patent Literature

Patent Literature 1: Japanese Patent Number 6787471

### Summary

### Technical Problem

In the above-described conventional technique, however, the number of fishes in a corf is sensed only and thus information on a plurality of fishes that are present in the corf is not necessarily estimated accurately from images.

### Solution to Problem

An information processing program that causes a computer to execute
an acquiring procedure of acquiring a plurality of captured images that are captured in a plurality of different directions, respectively, from a plurality of imaging devices that capture images of a corf in which a plurality of fishes are present respectively in the different directions; and
an estimating procedure of, based on a distance from the imaging device corresponding to each of the captured images acquired by the acquiring procedure to each of the fishes in each of the captured images, estimating first fish positional information representing a position of each of the fishes in the corf in each of the captured images with respect to each of the captured images, aggregating a plurality of sets of the first fish positional information corresponding to positions in a given area from a given position in the corf into second fish positional information representing a position of one fish, and estimating information on the fishes based on the second fish positional information.

### Advantageous Effects of Invention

According to a mode of the embodiment, an effect that it is possible to accurately estimate information on a plurality of fishes that are present in a corf from images is made.

### Brief Description of Drawings

FIG. 1 is a diagram for describing that the sizes of fish detected by object detection and a tail diagonal length necessary for a fish farmer are different from each other.
FIG. 2 is a diagram illustrating an example of a configuration of an information processing device according to an embodiment.
FIG. 3 is a diagram illustrating an example of arrangement of a plurality of imaging devices that capture images of a corf in a plurality of different directions, respectively.
FIG. 4 is a diagram illustrating an example of arrangement of captured images obtained by capturing images of the corf in which a plurality of fishes are present in the different directions and virtual objects corresponding to each captured image.
FIG. 5 is a diagram illustrating the view of arrangement of the virtual objects of the fish viewed in the respective directions in the same virtual space in an overlapping manner.
FIG. 6 is a diagram illustrating the view after aggregation of positional information on the virtual objects of the fish viewed in each direction.
FIG. 7 is a diagram illustrating the view of detection of virtual objects of fishes viewed in respective directions by object detection according to a first modification.
FIG. 8 is a diagram illustrating a relationship between a skeleton model of a virtual object of a fish and a tail diagonal length of the fish.
FIG. 9 is a diagram illustrating an example of a method of arranging virtual objects of fishes according to a second modification.
FIG. 10 is a hardware configuration diagram illustrating an example of a computer that realizes a function of the information processing device.

### Description of Embodiments

A mode for implementing an information processing program, an information processing device, and an information processing method according to the present application (referred to as "embodiment" below) will be described in detail below with reference to the drawings. Note that the embodiment does not limit the information processing program, the information processing device, and the information processing method. Note that the same reference numbers are assigned to the same parts in each embodiment below and redundant description will be omitted.

### Embodiment

### 1. Introduction

An object detection technique of executing positional estimation and class classification on an object of which still image or moving image (also referred to as an image below) is captured has been known. In object detection, a position of an object is detected as a rectangular frame (also referred to as bounding box).

Object detection is performed using a machine learning model that is trained previously to estimate a position and a class of an object in an image from the image (also referred to as a trained model below). For example, a captured image obtained by capturing image of a school of fish swimming in a corf is input as input information to the trained model and information on a position of each fish belonging to the school of fish in the captured image and the number of the fish is obtained as output information from the trained model.

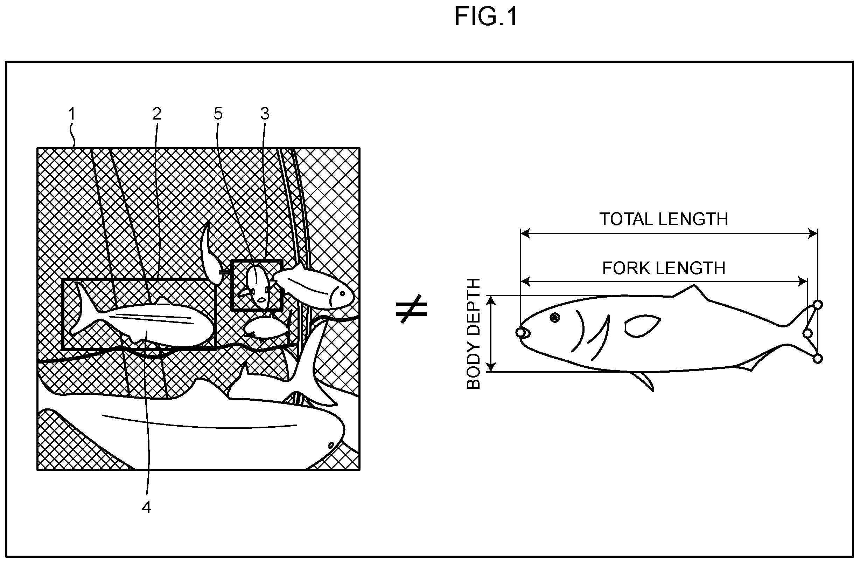

FIG. 1 is a diagram for describing that the sizes of fish detected by object detection and a tail diagonal length necessary for a fish farmer are different from each other. The left side in FIG. 1 illustrates a captured image 1 obtained by capturing an image of a school of fish swimming in a corf. The captured image 1 contains a fish 4 that is detected by object detection and a bounding box 2 surrounding the fish 4 and a fish 3 and a bounding box 5 surrounding the fish 3. The right side in FIG. 1 illustrates a relationship between a total length of fish, a tail diagonal length, and a body depth. Information necessary for an actual fish farmer is how many fishes in a shipment size there are. The shipment size is determined by the tail diagonal length. The fish farmer estimates the quantity of the fish based on the tail diagonal length.

The size of an object that is detected by object detection is the size of a bounding box. In the example illustrated in FIG. 1, the fish 4 detected from the captured image 1 has a shape close to one viewed right from the side with the head facing the back in the image. Thus, the length of one side of the bounding box 2 is different from the size of the fish 4 viewed right from the side (for example, the total length of the fish). The head of the fish 3 detected from the captured image 1 faces the front. Thus, the length of one side of the bounding box 5 is different from the size of the fish 3 viewed right from the side (for example, the total length of the fish).

As described above, what detected using the conventional object detection technique is the size of a bounding box and the size of the bounding box is different from the tail diagonal length necessary for the fish farmer.

On the other hand, the information processing device according to the embodiment acquires a plurality of captured images obtained by capturing images of a plurality of fishes in the water of the corf in a plurality of different directions using a plurality of image capturing devices. Subsequently, the information processing device estimates a distance between each fish in the captured image and the imaging device (also referred to as a camera-to-fish distance). Subsequently, the information processing device arranges a virtual object corresponding to each fish in each position corresponding to a camera-to-fish distance in a virtual space corresponding to the corf (also referred to as a corf space below). Subsequently, when a plurality of virtual objects overlap in the same position in the corf space, the information processing device selects one of the virtual objects and deletes the virtual objects other than the selected virtual object, thereby aggregating positional information on the virtual objects. Subsequently, the information processing device adjusts parameters of the position, the size, and the orientation of each of the virtual objects and the number of the virtual objects such that the error between the virtual image in the corf image corresponding to each of the captured images and the captured image corresponding to the virtual image decreases. Accordingly, the information processing device is able to accurately estimate the position, the size, and the orientation of each of the fishes present in the corf and the number of the fishes from the captured images obtained by capturing images of the corf in which the fishes are present. Accordingly, the information processing device is able to accurately estimate information on the fishes present in the corf from the images.

Note that there are, as dimensions representing a size of a fish, a total length, a standard length of body (length of body), a fork length, a body depth, and a body width of the fish. In the present specification, there is an idea that, when "the size of the fish" is written, it also covers the size of the fish measured according to any of the total length, the standard length of body (length of body), the fork length, the body depth, and the body width of the fish.

The case where an image is a moving image will be described below.

### 2. Configuration of Information Processing Device

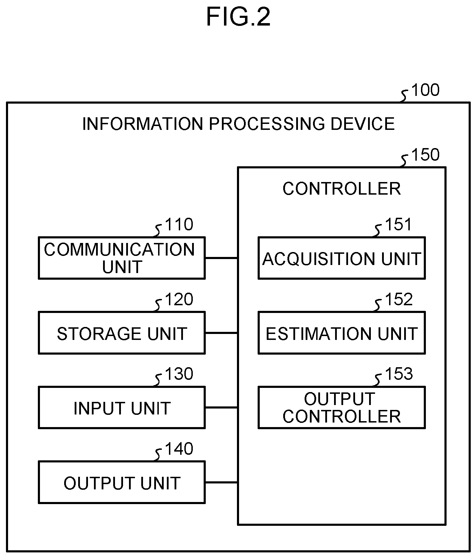

FIG. 2 is a diagram illustrating an example of a configuration of an information processing device 100 according to the embodiment. The information processing device 100 includes a communication unit 110, a storage unit 120, an input unit 130, an output unit 140, and a controller 150.

### Communication Unit 110

The communication unit 110, for example, is realized using a NIC (Network Interface Card), or the like. The communication unit 110 is connected to a network in a wired or wireless manner and transmits and receives information to and from the imaging device.

### Storage Unit 120

The storage unit 120, for example, is realized using a semiconductor memory device, such as a RAM (Random Access Memory) or a flash memory, or a storage device, such as a hard disk or an optical disk. Specifically, the storage unit 120 stores various types of programs (an example of the information processing program). The storage unit 120 stores camera identification information that identifies each imaging device and camera information on each imaging device in association with each other. For example, the storage unit 120 stores, as camera information, information on three-dimensional positional coordinates in the space of the corf contained in an area of which image can be captured by each imaging device and information representing a camera-to-camera distance between imaging devices that are stereo cameras, a focal distance, and a parallax.

### Input Unit 130

Various types of operations are input from a user. For example, the input unit 130 may receive various types of operations from the user via a display screen (for example, the output unit 140) using a touch panel function. The input unit 130 may receive various types of operations from a button with which the information processing device 100 is provided and a keyboard and a mouse that are connected to the information processing device 100.

### Output Unit 140

The output unit 140 is, for example, a display screen that is realized using a display, such as a liquid crystal display or an organic EL (Electro-Luminescence) display, and is a display device for displaying various types of information. The output unit 140 displays various types of information according to control by the controller 150. Note that, when a touch panel is used in the information processing device 100, the input unit 130 and the output unit 140 are integrated. In the following description, the output unit 140 is sometimes written as a screen.

### Controller 150

The controller 150 is a controller and, for example, is realized by a CPU (Central Processing Unit), a MPU (Micro Processing Unit), or the like, by executing various types of programs (corresponding to an example of the information processing program) that are stored in a storage device in the information processing device 100 using a RAM as a work area. The controller 150 is a controller and, for example, is realized using an integrated circuit, such as an ASIC (Application Specific Integrated Circuit) or a FPGA (Field Programmable Gate Array).

The controller 150 may include an acquisition unit 151, an estimation unit 152, and an output controller 153 as functional units and implement or execute the function of image processing described below. Note that the internal configuration of the controller 150 is not limited to the configuration illustrated in FIG. 2, and it may be another configuration as long as the configuration implements the information processing described below. Each functional unit represents a function of the controller 150 and need not necessarily be separated physically.

### Acquisition Unit 151

The acquisition unit 151 acquires, from the imaging devices that capture images of the corf in which the fishes are present in the respective different directions, a plurality of captured images obtained by capturing images in the different directions, respectively. For example, the acquisition unit 151 acquires the respective captured images from the respective imaging devices via the communication unit 110.

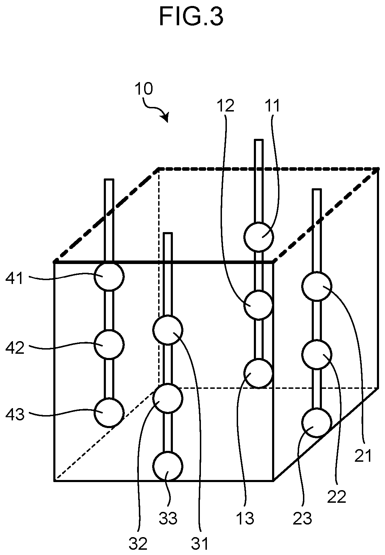

FIG. 3 is a diagram illustrating an example of arrangement of the imaging devices that capture images of the corf in the respective different directions. A corf 10 in FIG. 3 is shaped like a cubic box without an upper surface and, for example, is arranged in the seawater. The length of one side of the corf in FIG. 3 is three meters. The imaging devices are arranged on each side of the corf 10 according to the depths from the water surface. For example, imaging devices 11, 21, 31, and 41 are arranged on side surfaces, respectively, at a depth of one meter from the water surface. Imaging devices 12, 22, 32, and 42 are arranged on side surfaces, respectively, at a depth of two meters from the water surface. Imaging devices 13, 23, 33, and 43 are arranged on side surfaces, respectively, at a depth of three meters from the water surface. Each of the imaging devices 11 to 13, 21 to 23, 31 to 33, and 41 to 43 in FIG. 3 is a stereo camera consisting of two cameras.

As illustrated in FIG. 3, the position of each imaging device with respect to the corf 10 is known previously. The angle of view of each imaging device is known previously. Based on the position and the angle of each imaging device, an area of which image can be captured by each imaging device is known previously. Based on information on the area of which image can be captured by each imaging device, the acquisition unit 151 specifies information on the three-dimensional positional coordinates in the space of the corf contained in the area of which image can be captured by each imaging device. The storage unit 120 stores the information on the three-dimensional positional coordinates in the space of the corf contained in the area of which image can be captured by each imaging device in association with the camera identification information.

### Estimator 152

The estimation unit 152 estimates a distance to each fish in each captured image from the imaging device corresponding to each captured image acquired by the acquisition unit 151 (sometimes referred to as a camera-to-fish distance below). Specifically, the estimation unit 152 refers to the storage unit 120 and acquires the information representing the camera-to-camera distance between the imaging devices that are stereo cameras, the focal distance, and the parallax from the camera information that is associated with the camera identification information acquired by the acquisition unit 151. Subsequently, the estimation unit 152 estimates a camera-to-fish distance based on the acquired information representing the camera-to-camera distance, the focal distance, and the parallax and each captured image.

Subsequently, the estimation unit 152 refers to the storage unit 120 and acquires the information on the three-dimensional positional coordinates in the space of the corf contained in the area of which image can be captured by each imaging device from the camera information that is associated with the camera identification information that is acquired by the acquisition unit 151. Subsequently, based on the estimated camera-to-fish distance and the information on the three-dimensional positional coordinates in the space of the corf contained in the area of which image can be captured by each imaging device, the estimation unit 152 estimates first fish positional information representing a position of each fish in each captured image in the corf with respect to each captured image. Subsequently, the estimation unit 152 arranges a virtual object corresponding to each fish in each position corresponding to the first fish positional information in the virtual space corresponding to the corf (also referred to as a corf space below). The estimation unit 152 arranges the virtual objects in the respective positions in the corf space corresponding to the first fish positional information that is estimated with respect to each captured image.

After performing object detection on each captured image, the estimation unit 152 tracks each fish detected and thereby determines an orientation of each fish (the orientation of the head of each fish).

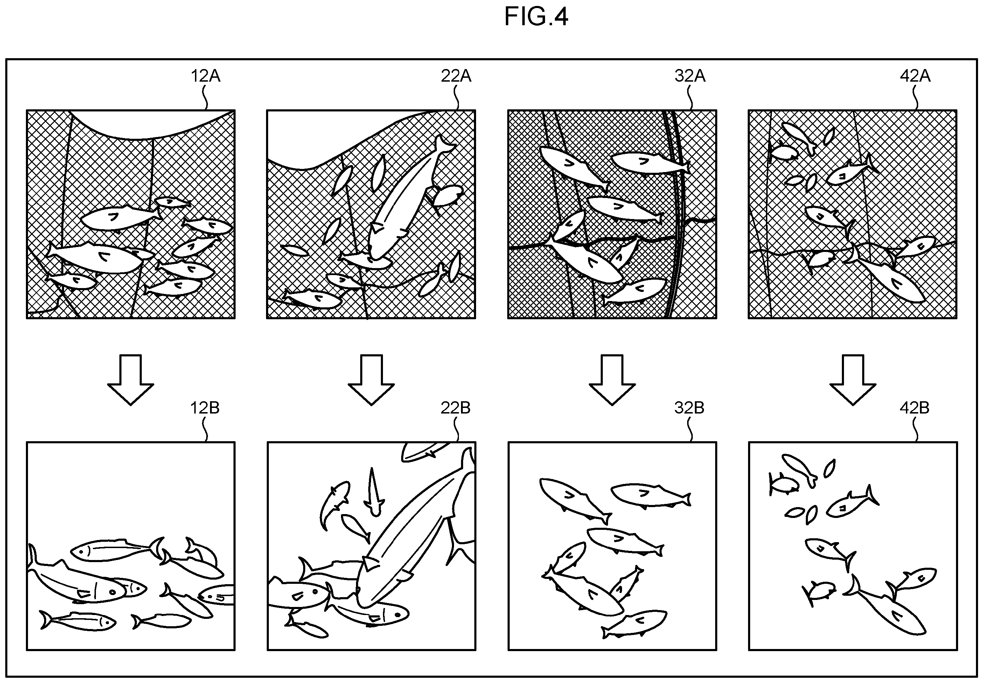

FIG. 4 is a diagram illustrating an example of arrangement of captured images obtained by capturing images of the corf in which the fishes are present in the different directions and virtual objects corresponding to each captured image. The upper section of FIG. 4 presents captured images 12A, 22A, 32A and 42A that are captured by the imaging devices 12, 22, 32 and 42, respectively. The lower section of FIG. 4 is of virtual images 12B, 22B, 32B and 42B presenting the state where the estimation unit 152 arranges the virtual objects in the respective positions in the corf space corresponding to the first fish positional information that is estimated with respect to each of the captured images 12A, 22A, 32A and 42A, respectively. In other words, the lower section of FIG. 4 presents the virtual images 12B, 22B, 32B and 42B obtained by capturing images of the corf space with virtual cameras 12', 22', 32' and 42' corresponding to the imaging devices 12, 22, 32 and 42.

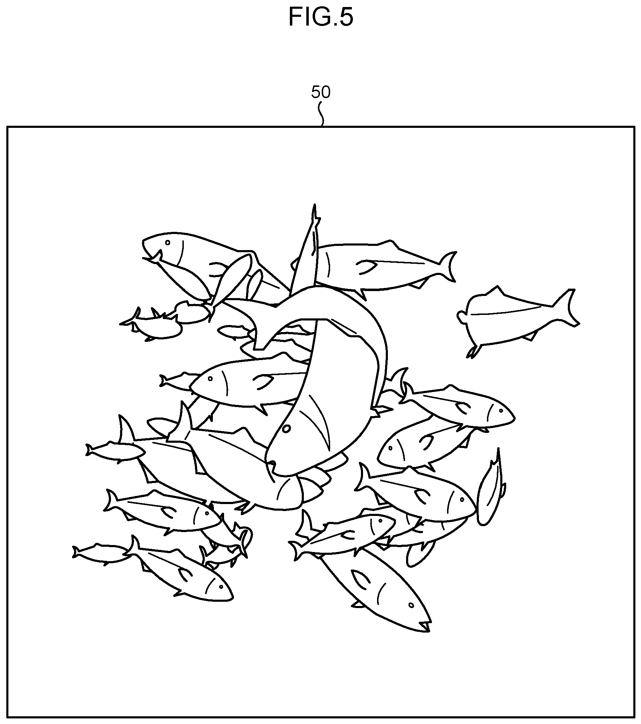

FIG. 5 is a diagram illustrating the view of arrangement of the virtual objects of the fish viewed in the respective directions in the same virtual space in an overlapping manner. FIG. 5 presents a virtual image 50 of the view of arrangement of the virtual objects corresponding to the virtual images 12B, 22B, 32B and 42B presented in the lower section of FIG. 4 in the same virtual space in an overlapping manner, viewed in a certain direction. FIG. 5 illustrates the view of arrangement of each virtual object viewed in each direction in the same virtual space in an overlapping manner.

The estimation unit 152 then aggregates a plurality of sets of first fish positional information corresponding to positions in a given area from a given position in the corf to second fish positional information representing a position of one fish. Specifically, when there is another virtual object overlapping the position of a given virtual object arranged in the virtual space, the estimation unit 152 aggregates the first fish positional information on the given virtual object and the first fish positional information on the another virtual object into second fish positional information representing the position of one fish. More specifically, when a plurality of virtual objects overlap in the same position in the virtual space, the estimation unit 152 selects one of the virtual objects and deletes the virtual objects other than the selected virtual object, thereby aggregating the positional information on the virtual objects. For example, the estimation unit 152 compares the areas of fish areas that are areas of the respective fish in each captured image. Subsequently, the estimation unit 152 selects, as the second fish positional information, the first fish positional information corresponding to a captured image having the largest area of the fish area from the sets of first fish positional information, thereby aggregating the sets of first fish positional information to the second fish positional information.

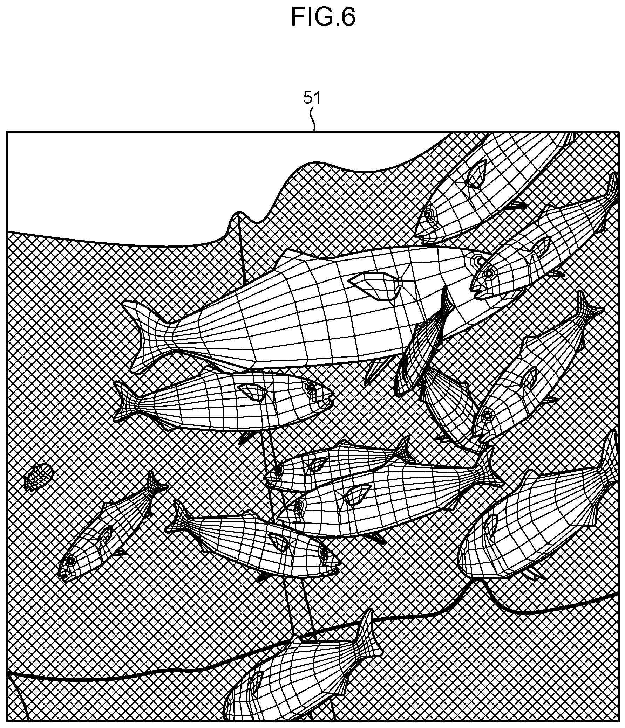

FIG. 6 is a diagram illustrating the view after aggregation of the positional information on the virtual objects of the fish viewed in each direction. FIG. 6 illustrates the view of a virtual image in which, compared to FIG. 5, the number of virtual objects decreases by the aggregation and that is thus similar to the actual captured image obtained by capturing an image of the school of fish present in the corf.

Note that, as for the above-described embodiment, the case where, when a plurality of virtual objects overlap in the same position in the virtual space, the estimation unit 152 selects one of the virtual objects and deletes the virtual objects other than the selected virtual object and thereby aggregates the positional information on the virtual objects is described; however, the method of aggregation is not limited to this. For example, when a plurality of virtual objects overlap in the same position in the virtual space, the estimation unit 152 calculates a representative value of the first fish positional information on the overlapping virtual objects. For example, the estimation unit 152 calculates an average, a median, or a mode of the sets of first fish positional information of the overlapping virtual objects. Subsequently, the estimation unit 152 may use the calculated representative value of the calculated sets of first fish positional information as the second fish positional information, thereby aggregating the sets of first fish positional information into the second fish positional information.

The estimation unit 152 generates a plurality of virtual images obtained by capturing images of the virtual space in which the virtual objects corresponding to the respective fish are arranged in the positions corresponding to the second fish positional information in the virtual space corresponding to the corf with the virtual cameras corresponding to the respective imaging devices. For example, the estimation unit 152 generates a plurality of virtual images obtained by capturing images of the corf space in which the virtual objects after aggregation illustrated in FIG. 6 are arranged with the virtual cameras corresponding to the respective imaging devices. In other words, the estimation unit 152 generates virtual images corresponding to the respective imaging devices.

Subsequently, the estimation unit 152 changes the value of the parameter relating to each virtual object such that an error between each virtual image and each captured image corresponding to each virtual image decreases. Specifically, the estimation unit 152 compares each virtual image and each captured image corresponding to each virtual image and changes the size and the orientation of each virtual object such that the error between each virtual image and each captured image decreases. More specifically, using a genetic algorithm, the estimation unit 152 may determine a value of the parameter relating to each virtual object that minimizes the error between each virtual object and each captured image corresponding to each virtual image. For example, the value of the parameter relating to each virtual object is a value representing a position of each virtual object, a value representing an orientation of each virtual object, or a value representing a size of each virtual object.

Note that, instead of using a genetic algorithm, the estimation unit 152 may determine a value of the parameter using a machine learning model. For example, when each virtual image and each captured image corresponding to each virtual image are input as input information, the estimation unit 152 may determine a value of the parameter relating to each virtual object using a machine learning model that is trained to output, as output information, a value of the parameter that minimizes the error between each virtual image and each captured image corresponding to each virtual image.

Subsequently, the estimation unit 152 estimates information on the fishes based on the value of the parameter relating to each virtual object after the change. For example, the information on the fishes is fish positional information representing a position of each fish in the corf, fish orientation information representing an orientation of each fish, fish size information representing a size of each fish, or number-of-fish information representing the number of the fishes. In this manner, the estimation unit 152 estimates information on the fishes based on the second fish positional information.

### Output Controller 153

The output controller 153 outputs the information on the fish estimated by the estimation unit 152 to the output unit 140. For example, the output controller 153 causes the output unit 140 to display the fish size information on each fish in the corf and the number-of-fish information that are estimated by the estimation unit 152.

### 3. Modification

The information processing device 100 described above may be implemented in various different modes in addition to the above-described embodiment. Thus, modifications of the embodiment will be described below.

### 3-1. First Modification

As for the above-described embodiment, the case where the estimation unit 152 estimates the information on the fishes based on the positional information on the virtual objects has been described. In a first modification, the estimation unit 152 estimates posture information on postures of the virtual objects and, based on the posture information, estimates information on the fishes. Thus, the information processing device 100, for example, is able to estimate a size of each fish accurately. Accordingly, the information processing device 100 is able to increase accuracy in estimating the information on the fishes.

Specifically, the estimation unit 152 performs object detection on the virtual images after the aggregation corresponding to the respective captured images. Subsequently, the estimation unit 152 detects each virtual object in each of the virtual images and, based on a bounding box surrounding each detected virtual object, estimates posture information on the posture of each detected virtual object. Subsequently, the estimation unit 152 estimates information on the fishes based on the posture information.

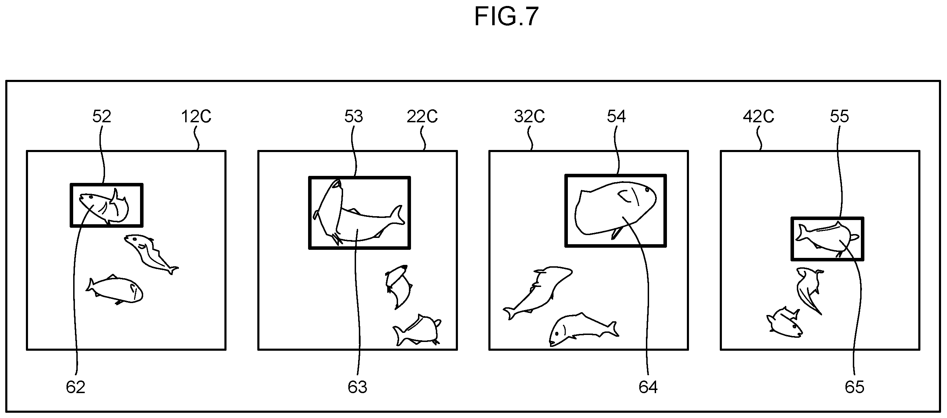

FIG. 7 is a diagram illustrating the view of detection of virtual objects of fishes viewed in respective directions by object detection according to the first modification. FIG. 7 illustrates virtual images 12C, 22C, 32C and 42C obtained by capturing images of the corf space after the aggregation with the virtual cameras 12', 22', 32' and 42' corresponding to the imaging devices 12, 22, 32 and 42. In FIG. 7, the virtual images 12C, 22C, 32C and 42C contain the same fish 62, 63, 64 and 65 and bounding boxes 52, 53, 54 and 55 surrounding the fish 62, 63, 64 and 65.

The estimation unit 152 estimates postures of the virtual objects in the respective bounding boxes. Specifically, the estimation unit 152 estimates how a skeleton model of the virtual object in each bounding box curves. More specifically, the estimation unit 152 estimates an angle formed by a joint and a bone in a pair forming the skeleton model. A pair of a cubic joint and a conical bone is referred to as a rig. In other words, the estimation unit 152 estimates what angle each rig should keep for fitting inside each bounding box. As described above, with respect to the same virtual object that is detected in each virtual image, the estimation unit 152 estimates the posture of the virtual object fitting inside each bounding box. For example, the estimation unit 152 may use a genetic algorithm and use, as a result of the estimation, a posture of the virtual object that minimizes the error between sets of information on the posture that is estimated to allow fitting in each bounding box.

The estimation unit 152 may estimate a posture of a virtual object using a machine learning model instead of using the genetic algorithm. For example, when each bounding box relating to the same virtual object that is detected in each virtual image and an image of the virtual object contained in each bounding box are input as input information, the estimation unit 152 may estimate a posture of the virtual object using a machine learning model that is trained to output, as output information, information on a posture of the virtual object that minimizes an error between sets of information on a posture that is estimated to allow fitting in each bounding box.

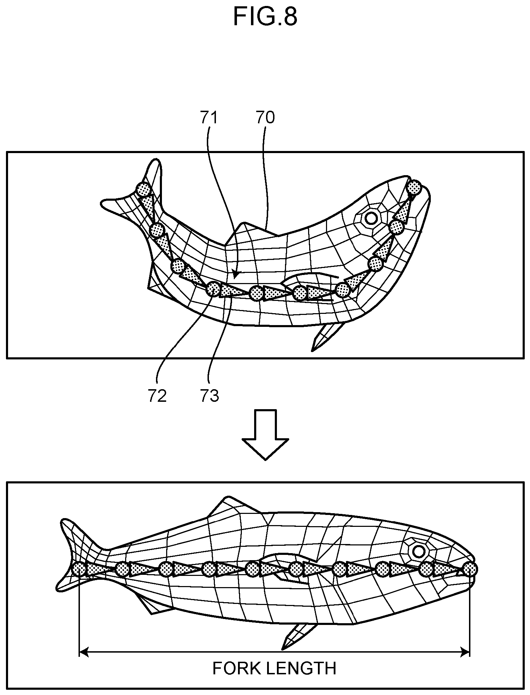

FIG. 8 is a diagram illustrating a relationship between a skeleton model of a virtual object of a fish and a fork length of the fish. FIG. 8 illustrates a virtual object 70 of the fish, a skeleton model 71 of the virtual object 70, and cubic joints and conical bones forming the skeleton model 71. The upper section of FIG. 8 illustrates the view of the virtual object in a abounding box like that illustrated in FIG. 7 curving the body in a C-like shape. When a posture of the virtual object is estimated, the estimation unit 152 straightens the curved rigs of the skeleton model and thus is able to estimate a tail diagonal length of the virtual object accurately.

The case where the estimation unit 152 estimates the posture of the virtual object using the virtual image after the aggregation corresponding to each captured image is described above; however, the estimation unit 152 may estimate the position of the virtual object using the virtual image after the aggregation corresponding to at least one of the captured images. Specifically, the estimation unit 152 performs transfer learning on a first estimation model that estimates a posture of a person, thereby generating a second estimation model that estimates a posture of a virtual object of a fish. Subsequently, the estimation unit 152 inputs a virtual image after aggregation corresponding to at least one captured image as input information to the second estimation model, thereby estimating a posture of the virtual object contained in the virtual image after aggregation corresponding to the at least one captured image.

### 3-2. Second Modification

As for the above-described embodiment, the case where the information processing device 100 is able to estimate the camera-to-fish distance is described. In a second modification, the case where the information processing device 100 does not enable to estimate a camera-to-fish distance will be described. The case where the information processing device 100 does not enable to estimate a camera-to-fish distance here corresponds to, for example, the case where each imaging device that captures an image of a corf is not a stereo camera but a monocular camera.

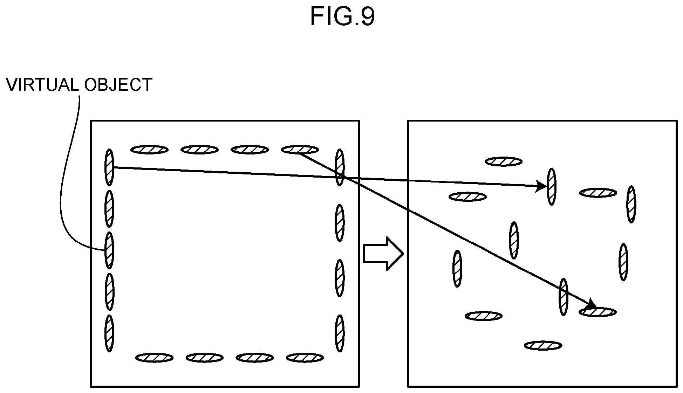

FIG. 9 is a diagram illustrating an example of a method of arranging virtual objects of fishes according to the second modification. The left side in FIG. 9 is a view of the corf space viewed from the upper surface. In FIG. 9, the virtual objects are arranged in a row in the same distance from each of the virtual cameras in four directions. In FIG. 9, each of the virtual objects has the same size. In FIG. 9, the estimation unit 152 gradually separates the position of each virtual object in the corf space from the position of the virtual camera and moves each virtual object to a position where each virtual object is viewed in a similar size to the size of each fish in the captured image captured by the imaging device corresponding to the virtual camera. The estimation unit 152 takes the same process with respect to the four directions and arranges the respective virtual objects in positions that are best matched when viewed in the four directions. When a numerical value representing a degree of matching in views in four directions is at or under a given threshold, the estimation unit 152 arranges each virtual object in a position viewed in each direction.

### 4. Effect

As described above, the information processing device 100 according to the embodiment includes the acquisition unit 151 and the estimation unit 152. The acquisition unit 151 acquires a plurality of captured images that are captured in a plurality of different directions, respectively, from a plurality of imaging devices that capture images of a corf in which a plurality of fishes are present respectively in the different directions. Based on a distance from the imaging device corresponding to each of the captured images acquired by the acquisition unit 151 to each of the fishes in each of the captured images, the estimation unit 152 estimates first fish positional information representing a position of each of the fishes in the corf in each of the captured images with respect to each of the captured images, aggregates a plurality of sets of the first fish positional information corresponding to positions in a given area from a given position in the corf into second fish positional information representing a position of one fish, and estimates information on the fishes based on the second fish positional information.

Accordingly, the information processing device 100 is able to accurately estimate the position, the size, and the orientation of each of the fishes present in the corf and the number of the fishes from the captured images obtained by capturing images of the corf in which the fishes are present. Accordingly, the information processing device 100 is able to accurately estimate information on the fishes present in the corf from the images.

The estimation unit 152 aggregates the sets of the first fish positional information into the second fish positional information by, based on an area of a fish area that is an area in which each of the fishes is in each of the captured images, selecting, as the second fish positional information, the first fish positional information corresponding to the captured image having the largest area of the fish area from the sets of the first fish positional information.

Here, it is considered that the first fish positional information corresponding to a captured image having a larger area of a fish area than that of the first fish positional information corresponding to a captured image having a small area of a fish area is more accurate with respect to the first fish positional information. Accordingly, the information processing device 100 is able to select the first fish positional information that is more accurate from the sets of the first fish positional information as the second positional information.

The estimation unit 152 generates a plurality of virtual images obtained by, with a plurality of virtual cameras corresponding to the imaging devices, respectively, capturing images of the virtual space corresponding to the corf in which a virtual object corresponding to each of the fishes is arranged in a position corresponding to the second fish positional information in the virtual space, changes a value of a parameter relating to each virtual object such that an error between each of the virtual images and each of the captured images corresponding to each of the virtual images decreases, and estimates information on the fishes based on the value of the parameter relating to each virtual object after the changing.

Accordingly, based on comparison between each virtual image and each captured image corresponding to each virtual image, the information processing device 100 is able to accurately estimate the position, the size, and the orientation of each of the fishes present in the corf and the number of the fishes from the captured images obtained by capturing images of the corf in which the fishes are present.

The value of the parameter relating to each virtual object is a value representing a position of each virtual object, a value representing an orientation of each virtual object, or a value representing a size of each virtual object.

Accordingly, the information processing device 100 is able to accurately estimate the position, the size, and the orientation of each of the fishes present in the corf and the number of the fishes from the captured images obtained by capturing images of the corf in which the fishes are present.

The estimation unit 152 performs object detection on the virtual image corresponding to at least one of the captured images, detects each virtual object in the virtual image, estimates posture information on a posture of detected each virtual object based on a size of a bounding box surrounding detected each virtual object, and estimates information on the fishes.

Accordingly, the information processing device 100, for example, is able to estimate a size of each fish. Accordingly, the information processing device 100 is able to increase accuracy in estimating information on the fishes.

The information on the fishes is fish positional information representing a position of each of the fishes in the corf, fish orientation information representing an orientation of each of the fishes, fish size information representing a size of each of the fishes, or the-number-of-fish information representing the number of the fishes.

Accordingly, the information processing device 100 is able to provide information on how many fishes in a shipment size there are to fish farmers.

### 5. Hardware Configuration

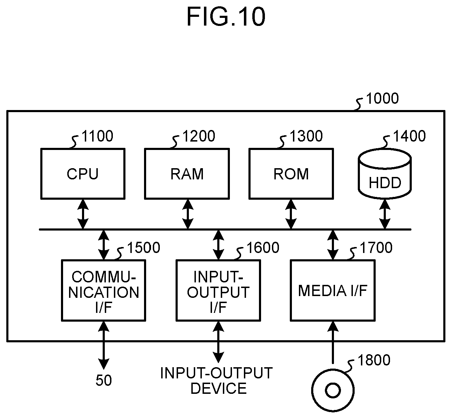

The information processing device 100 according to the above-described embodiment is realized by, for example, a computer 1000 having a configuration like that illustrated in FIG. 10. FIG. 10 is a hardware configuration diagram illustrating an example of a computer that implements the functions of the information processing device 100. The computer 1000 includes a CPU 1100, a RAM 1200, a ROM 1300, a HDD 1400, a communication interface (I/F) 1500, an input-output interface (I/F) 1600 and a media interface (I/F) 1700.

The CPU 1100 operates according to programs that are stored in the ROM 1300 or the HDD 1400 and controls each unit. The ROM 1300 stores a boot program that is executed by the CPU 1100 to start the computer 1000, a program that is dependent on hardware of the computer 1000, etc.

The HDD 1400 stores a program that is executed by the CPU 1100, data that is used by the program, etc. The communication interface 1500 receives data from another device and transmits the data to the CPU 1100 via a given communication network and transmits data that is generated by the CPU 1100 to another device via the given communication network.

The CPU 1100 controls an output device, such as a display or a printer, and an input device, such as a keyboard or a mouse, via the input-output interface 1600. The CPU 1100 acquires data from the input device via the input-output interface 1600. The CPU 1100 outputs generated data to the output device via the input-output interface 1600.

The media interface 1700 reads a program or data that is stored in a recording medium 1800 and provides the program or the data to the CPU 1100 via the RAM 1200. The CPU 1100 loads the program from the recording medium 1800 into the RAM 1200 via the media interface 1700 and executes the loaded program. The recording medium 1800 is, for example, an optical recording medium, such as a digital versatile disc (DVD) or a phase change rewritable disk (PD), a magneto-optical recording medium, such as a magneto-optical disk (MO), a tape medium, a magnetic recording medium, or a semiconductor memory.

For example, when the computer 1000 functions as the information processing device 100 according to the embodiment, the CPU 1100 of the computer 1000 executes the program that is loaded into the RAM 1200 to implement the function of the controller 150. The CPU 1100 of the computer 1000 reads the programs from the recording medium 1800 and executes the programs and, in another example, the CPU 1100 may acquire the programs from another device via the given communication network.

Some embodiments of the present application have been described in detail according to the drawings; however, the embodiments are exemplified ones and, starting with the mode described in the section of the disclosure of the invention, it is possible to carry out the present invention in other modes in which various modifications and improvements are made based on the knowledge of those skilled in the art.

### 6. Remarks

Among the processes described in the above-described embodiments and modifications, all or part of processes that are described as being performed automatically may be performed manually or all or part of processes that are described as being performed manually may be performed automatically by a known method. Additionally, the procedures, the specific names, and the information including various types of data and parameters that are presented in the description above and the drawings are changeable freely except as otherwise provided. For example, the various types of information presented in each drawing are not limited to the information illustrated in the drawings.

Each of the components of each of the devices illustrated in the drawings is of functional ideas and need not necessarily be configured physically as illustrated in the drawings. In other words, specific modes of distribution and integration of each device are not limited to those illustrated in the drawings, and all or part of the devices may be configured by being distributed or integrated functionally or physically in any unit according to various types of load and usage.

It is also possible to combine the embodiments and the modifications described above as appropriate as long as the content of the processes is not made inconsistent.

### Reference Signs List

- 100: INFORMATION PROCESSING DEVICE
- 110: COMMUNICATION UNIT
- 120: STORAGE UNIT
- 130: INPUT UNIT
- 140: OUTPUT UNIT
- 150: CONTROLLER
- 151: ACQUISITION UNIT
- 152: ESTIMATOR
- 153: OUTPUT CONTROLLER

## Claims

1. An information processing program that causes a computer to execute
an acquiring procedure of acquiring a plurality of captured images that are captured in a plurality of different directions, respectively, from a plurality of imaging devices that capture images of a corf in which a plurality of fishes are present respectively in the different directions; and
an estimating procedure of, based on a distance from the imaging device corresponding to each of the captured images acquired by the acquiring procedure to each of the fishes in each of the captured images, estimating first fish positional information representing a position of each of the fishes in the corf in each of the captured images with respect to each of the captured images, aggregating a plurality of sets of the first fish positional information corresponding to positions in a given area from a given position in the corf into second fish positional information representing a position of one fish, and estimating information on the fishes based on the second fish positional information.

2. The information processing program according to claim 1, wherein the estimating procedure includes aggregating the sets of the first fish positional information into the second fish positional information by, based on an area of a fish area that is an area in which each of the fishes is in each of the captured images, selecting, as the second fish positional information, the first fish positional information corresponding to the captured image having the largest area of the fish area from the sets of the first fish positional information.

3. The information processing program according to claim 1, wherein the estimating procedure includes generating a plurality of virtual images obtained by, with a plurality of virtual cameras corresponding to the imaging devices, respectively, capturing images of a virtual space corresponding to the corf in which a virtual object corresponding to each of the fishes is arranged in a position corresponding to the second fish positional information in the virtual space, changing a value of a parameter relating to each virtual object such that an error between each of the virtual images and each of the captured images corresponding to each of the virtual images decreases, and estimating information on the fishes based on the value of the parameter relating to the each virtual object after the changing.

4. The information processing program according to claim 3, wherein the value of the parameter relating to each virtual object is a value representing a position of the each virtual object, a value representing an orientation of the each virtual object, or a value representing a size of the each virtual object.

5. The information processing program according to claim 3, wherein the estimating procedure includes performing object detection on the virtual image corresponding to at least one of the captured images, detecting the each virtual object in the virtual image, estimating posture information on a posture of the detected each virtual object based on a size of a bounding box surrounding the detected each virtual object, and estimating information on the fishes.

6. The information processing program according to claim 3, wherein the information on the fishes is fish positional information representing a position of each of the fishes in the corf, fish orientation information representing an orientation of each of the fishes, fish size information representing a size of each of the fishes, or number-of-fish information representing the number of the fishes.

7. An information processing device comprising:
an acquisition unit that acquires a plurality of captured images that are captured in a plurality of different directions, respectively, from a plurality of imaging devices that capture images of a corf in which a plurality of fishes are present respectively in the different directions; and
an estimation unit that, based on a distance from the imaging device corresponding to each of the captured images acquired by the acquisition unit to each of the fishes in each of the captured images, estimates first fish positional information representing a position of each of the fishes in the corf in each of the captured images with respect to each of the captured images, aggregates a plurality of sets of the first fish positional information corresponding to positions in a given area from a given position in the corf into second fish positional information representing a position of one fish, and estimates information on the fishes based on the second fish positional information.

8. An information processing method that is implemented by a program that an information processing device executes, the method comprising:
an acquiring step of acquiring a plurality of captured images that are captured in a plurality of different directions, respectively, from a plurality of imaging devices that capture images of a corf in which a plurality of fishes are present respectively in the different directions; and
an estimating step of, based on a distance from the imaging device corresponding to each of the captured images acquired by the acquiring step to each of the fishes in each of the captured images, estimating first fish positional information representing a position of each of the fishes in the corf in each of the captured images with respect to each of the captured images, aggregating a plurality of sets of the first fish positional information corresponding to positions in a given area from a given position in the corf into second fish positional information representing a position of one fish, and estimating information on the fishes based on the second fish positional information.
